# EUROPEAN PATENT APPLICATION

(11) **EP 3 570 426 A1**
(43) Date of publication of application: **20.11.2019**
(21) Application number: 19275066.9
(22) Date of filing: 14.05.2019
(51) Int. Cl.: H02P 9/10, H02P 29/024, H02P 29/028, H02P 9/48, B60H 1/32, B60P 3/20, H02J 1/14

(54) **POWER CONTROL SYSTEM**

(30) Priority: 14.05.2018 GB 201807799
(71) Applicant: GAH (Refrigeration Products) Limited, Framlingham Woodbridge Suffolk IP13 9AZ (GB)
(72) Inventor: Peak, Bob, Woodbridge, Suffolk IP12 2TW (GB); Buckles, Martin, Woodbridge, Suffolk IP12 2TW (GB)
(74) Representative: Williams Powell

(57) **Abstract**

A power control system is disclosed. The power control system comprises a sensor and a control output, the sensor being arranged to monitor an operational parameter of an alternator powering a plurality of systems, wherein upon the sensor detecting a predetermined condition from the operational parameter, the power control system is arranged to output a control signal via the control output to change operation of one of the plurality of systems.

## Description

### Field of the Invention

The present invention relates to a power control system for use with an alternator and which is particularly applicable for use in vehicles employing refrigeration systems.

### Background to the Invention

Vehicle based refrigeration systems are commonplace in fields such as food and medicine transportation and delivery. Often, a van or small truck transport refrigeration system has two compressors fitted, one for over the road operation fitted to the vehicle engine to take its drive from the crankshaft and the other mounted elsewhere for standby operation. The standby compressor is typically used when the vehicle is parked up and the standby compressor can be plugged in to a "mains" electricity supply.

However, various problems are being experienced with such an arrangement:
- With modern vehicles, engine bays are becoming more and more restrictive with regard to available space for mounting extra equipment. Vehicles are commonly being specified with air conditioning and other ancillary equipment which all takes away available room for mounting a refrigeration compressor.
- Many vehicles now have turbo chargers and catalytic converters which run very hot and have to be avoided when mounting compressors and routing rubber hoses.
- Even when suitable space can be found to fit the required parts, the act of fitting them often requires significant disassembly of the front end of the vehicle. This often includes the removal of components including radiators and power steering pipes. As these are predominantly brand-new vehicles, disassembly and reassembly is undesirable and questions are then inevitably raised as to whose responsibility it is if something subsequently goes wrong with that part of the vehicle; is it the fridge installer or the vehicle manufacturer?
- The sheer complexity of the parts required and the amount of time they take to fit is now beginning to create large additional costs for this approach.

The present invention seeks to address these and other issues.

### Statement of Invention

According to an aspect of the present invention, there is provided a power control system comprising a sensor and a control output, the sensor being arranged to monitor an operational parameter of an alternator powering a plurality of systems, wherein upon the sensor detecting a predetermined condition from the operational parameter, the power control system is arranged to output a control signal via the control output to change operation of one of the plurality of systems.

Preferably, the operational parameter comprises saturation of alternator windings. The sensor may be arranged to monitor output voltage of the alternator and determine the saturation of the alternator windings from the output voltage.

The predetermined condition may comprise the saturation exceeding a predetermined threshold, exhibiting a predetermined characteristic or leaving a predetermined range. The control signal comprises a control signal to disable operation, a control signal to enable operation, a control signal to reduce power draw or some other control signal.

The power control system may preferably comprise a data repository defining a hierarchy for the plurality of systems, the power control system being arranged to output a control signal to one of the plurality of systems in accordance with the hierarchy.

The power control system may be arranged to output a control signal via the control output to change operation of another of the plurality of systems upon the sensor continuing to detect the predetermined condition.

Embodiments of the present invention are particularly advantageous in commercial vehicles as these can generally be specified with uprated alternators direct from the manufacturers which can give a very high output and under the majority of situations have large amounts of spare capacity available. Whilst embodiments of the present invention can operate using conventional alternators, they are particularly advantageous for use with alternators having increased capacity as they can power many systems and in turn those many systems can be candidates for turning off/reducing power draw should power be needed elsewhere such as to increase power to refrigeration.

Preferably, the focus of the power control system is satisfying power needs of an ancillary component such as a fridge. The vehicle places its own varying demands on the capacity of the alternator, some of which must take precedence over the demands of the fridge (such as those that are safety related i.e. screen de-mist function, blower, wipers, lights etc). Others systems are preferably classified in a hierarchy of "nice to haves" such as heated seats and air conditioning and the control system sacrifices these as needed in favour of the fridge or other critical systems.

It will be appreciated that embodiments of the present invention are adaptive and make the best use of alternator capacity. This approach is particularly advantageous compared to other approaches such as working out the maximum load that could be taken by the vehicle and restricting the power consumed by the fridge to only that available above this maximum. Embodiments of the present invention inherently take into account environmental conditions, seasons etc by enabling critical systems to operate when they need to and using alternator capacity when they do not. Likewise, non-critical systems are only impeded when necessary and permitted to draw from the alternator as desired the rest of the time.

### Brief Description of the Drawings

An embodiment of the present invention will now be described by way of example only and with reference to the accompanying drawing in which:

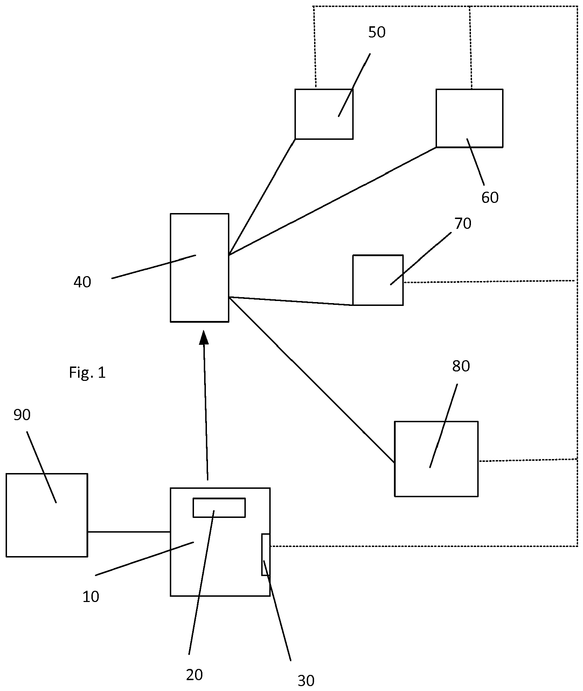

Figure 1 is a schematic diagram of a power control system according to an embodiment.

### Detailed Description

Figure 1 is a schematic diagram of a power control system according to an embodiment.

The power control system 10 comprises a sensor 20 and a control output 30. The sensor is arranged to monitor an operational parameter of an alternator 40 powering a plurality of systems 50, 60, 70, 80. Upon the sensor 20 detecting a predetermined condition from the operational parameter, the power control system 10 is arranged to output a control signal via the control output 30 to change operation of one of the plurality of systems 50-80.

For example, the systems 50-80 may be a fridge 50, vehicle lights 60, heated seats 70 and cd player 80.

Preferably, the operational parameter comprises saturation of alternator windings. The sensor may determine or estimate the operational parameter by reference to other parameters such as heat output of the alternator, output voltage etc. It may be that during a configuration step, the capacity, model or other data on the alternator is provided to the power control system 10 to enable it to determine saturation.

The power control system 10 may be monitoring for the saturation exceeding a predetermined threshold, exhibiting a predetermined characteristic or leaving a predetermined range. When it does so, the power control system 10 takes action to reduce draw on the alternator. Preferably this takes into account criticality of the systems (so in the example of Figure 1, the vehicle lights 60 would never be interfered with but the heated seats 70 and cd player 80 could be commanded to use less power or turn off depending on power need of the fridge 50. The power needs of the fridge may be received from a controller associated with the fridge or may be determined by monitoring. Likewise, control of the heated seats, cd player etc may be by signalling an appropriate controller, controlling the alternator to disable power (or causing tripping of a switch or similar between alternator and system in question). It will be appreciated that in-vehicle systems such as the vehicle's CAN bus or similar could be used to communicate with the systems (and potentially monitor the alternator).

The power control system may preferably comprise a data repository 90 defining a hierarchy for the plurality of systems, the power control system being arranged to output a control signal to one of the plurality of systems in accordance with the hierarchy. The data repository can be implemented in software, hardware or firmware and could be as simple (no knowledge of the systems, the control system just knows it can request systems 1-n in sequence to be disabled so as to maintain alternator saturation below a predetermined threshold) or complex (a database or similar which tracks state of connected systems, estimated power draw and is used to select best system(s) to disable etc) as needed. It will be appreciated that the power control system and/or repository could be implemented in an FPGA, state machine or similar.

The power control system may be arranged to output a control signal via the control output to change operation of another of the plurality of systems upon the sensor continuing to detect the predetermined condition. Systems may be disabled/ordered to reduce power draw sequentially, in parallel or in some other scheme. Similarly, systems may be re-enabled once saturation/demand is detected to have dropped off.

Embodiments of the present invention enable monitoring the available alternator output over and above that currently being used in real-time using an associated phenomenon of an alternator called "saturation". This allows the system to make almost full use of that remaining capacity. The available capacity of a vehicle alternator is a constantly changing value based not only on the load being consumed by the vehicle and other devices but it is also significantly affected by its own internal temperature (this can affect the output by as much as +/- 20%). In preferred embodiments, an in-vehicle fridge is powered through the vehicle's main alternator. By measuring/determining/estimating saturation (or some other comparable parameter) in real time and adjusting the fridge power consumption to suit, the system can be optimised to make best use of the available power under all conditions, resulting in a far more efficient and potentially more powerful system.

In preferred embodiments, the output voltage of the alternator is determined so as to be able to ascertain when saturation of the alternator windings is being approached. By using this reading the compressor of a fridge powered by the alternator can be adjusted to maintain an alternator output just below this saturation level. This maximises the fridge output where possible. Preferably, a hierarchy of vehicle systems (consumers) is produced. A position for the fridge is determined within this hierarchy and control signals sent back from the fridge control to the power control system preferably cause the "nice to haves" lower in the hierarchy to be turned off if the fridge demand is beginning to suffer from lack of alternator capacity.

## Claims

1. A power control system comprising a sensor and a control output, the sensor being arranged to monitor an operational parameter of an alternator powering a plurality of systems, wherein upon the sensor detecting a predetermined condition from the operational parameter, the power control system is arranged to output a control signal via the control output to change operation of one of the plurality of systems.

2. The power control system of claim 1, wherein the operational parameter comprises saturation of alternator windings.

3. The power control system of claim 2, wherein the sensor is arranged to monitor output voltage of the alternator and determine the saturation of the alternator windings from the output voltage.

4. The power control system of claim 2 or 3, wherein the predetermined condition comprises the saturation exceeding a predetermined threshold.

5. The power control system of any preceding claim, wherein the control signal comprises a control signal to disable operation.

6. The power control system of any preceding claim, wherein the control signal comprises a control signal to enable operation.

7. The power control system of any preceding claim, wherein the control signal comprises a control signal to reduce power draw.

8. The power control system of any preceding claim, further comprising a data repository defining a hierarchy for the plurality of systems, the power control system being arranged to output a control signal to one of the plurality of systems in accordance with the hierarchy.

9. The power control system of any preceding claim, wherein the power control system is arranged to output a control signal via the control output to change operation of another of the plurality of systems upon the sensor continuing to detect the predetermined condition.
